# EUROPEAN PATENT APPLICATION

(11) **EP 0 851 103 A2**
(43) Date of publication of application: **01.07.1998**
(21) Application number: 97830727.0
(22) Date of filing: 29.12.1997
(51) Int. Cl.: F02B 27/06

(54) **A variable geometry exhaust system for two stroke internal combustion engines**

(30) Priority: 30.12.1996 IT FI960308
(71) Applicant: Romboli, Andrea, 56124 Pisa (IT)
(72) Inventor: Romboli, Andrea, 56124 Pisa (IT)
(74) Representative: Bardini, Marco Luigi

(57) **Abstract**

A variable geometry exhaust system for two stroke internal combustion engines comprises an exhaust pipe (1) through which burnt gases are discharged, and an axially slidable element (2) placed inside said pipe, formed by a stem portion and with one end (3) of gradually diminishing section that faces back into the pipe. The slidable element cooperates with the pipe to create a passage (4) through which the gases are directed, and is displaceable by way of an associated mechanism (17) as the revolutions per minute of the engine increase or decrease.

## Description

The present invention relates to the field of internal combustion engines, and in particular to an exhaust system for two stroke engines of the type having an exhaust pipe of variable geometry.

Systems of variable geometry for exhausting burnt gases are already already known in the prior art in the field of two stroke internal combustion engines and have found widespread application. The operating characteristic of such systems is fundamentally that of varying the length of the exhaust pipe in response to the speed of rotation of the engine and in such a way as will enable the engine to deliver maximum performance not only at one given speed of rotation, but across as wide as possible a band of speeds within which the exhaust system is caused to "resonate".

In the case of conventional exhaust pipes having a fixed geometry, the operation of the engine is optimized at a particular speed of rotation by embodying one section of the pipe as an expansion chamber of double cone embodiment, i.e. a diffuser cone or divergent portion followed by a reverse cone or convergent portion, possibly also with an interconnecting cylindrical portion, so that when a pressure wave propagated within the exhaust pipe encounters the convergent portion it is reflected back toward the engine cylinder. The geometry of the double cone section is such that the reversion wave generated in this way will reach the outlet port of the cylinder during the final stage of the scavenge and create a barrier preventing any escape of the fresh fuel-air mixture needed for the next power cycle. If the geometry of the cones is fixed, it follows naturally that optimum operation of the engine will be obtained only at a specific number of revolutions per minute.

Many solutions have been proposed in view of overcoming the problem and optimizing the performance of a two stroke engine not simply at a particular speed of rotation but across a range of speeds; these include varying the geometry of the double cone section. One such solution for varying the geometry in question mechanically consists in replacing the aforementioned single intermediate cylindrical portion with two cylindrical portions coupled one to another telescopically and caused to slide thus by an actuator that comes into operation when the engine revolutions increase or decrease. This solution has found no significant application at industrial level; besides affording very limited travel, it is penalized by serious problems in obtaining a tight seal and difficulties connected with the sliding movement.

Another known system, which produces an effect equivalent to that of varying the length of the exhaust pipe, involves injecting water into the pipe to the end of cooling the exhaust gases and reducing their propagation velocity, thus virtually increasing the length of the exhaust pipe overall. Apart from the difficulties with control presented objectively by this system, there is the additional drawback that the vehicle must carry a water tank. Moreover, the autonomy of the system is limited, a drawback that argues against its use in production engines. The same principle is applied to bring about a virtual reduction in length of the exhaust system, the exhaust temperature being modified by means of special aerodynamic profiles located near to the end of the reverse cone such as will raise the temperature of the exhaust gases as the engine revolutions increase.

An object of the present invention is to increase the efficiency of a two stroke engine and widen its useful optimum powerband while keeping the existing inlet geometry, the engine timing and the tuning frequency of the traditional exhaust system, including the characteristic angles, or alternatively to maximize efficiency by stepping up the expansion profiles while keeping the existing powerband.

One particular object of the present invention is to provide a variable geometry exhaust system for two stroke internal combustion engines in which the variation is obtained mechanically, though without the creation of problems in maintaining a fluid tight seal or difficulties with the sliding action of moving parts.

Another object of the invention is to provide a system of the above-mentioned kind that will allow of producing dimensional variations both in the length and in the nominal cross section of the terminal portion of the exhaust pipe.

These objects have been achieved with the variable geometry exhaust system for two stroke engines according to the present invention, characterized in that the exhaust pipe accommodates an axially slidable element presenting a shaft-like portion and an end portion the section of which tapers toward the inside of the pipe, in that the slidable element and the pipe combine to delimit a passage through which exhaust gases are caused to discharge, and in that it comprises means by which to bring about the displacement of the slidable element as a function of engine speed. In particular, the movements of the slidable element are brought about through the agency of a servo mechanism piloted by changes in the engine revolutions and conceivably also in the load conditions. The sliding element can be mounted on an axially extending guide disposed within the dimensional compass of the element itself, or on radial guides afforded by the exhaust pipe.

For a fuller appreciation of the features and advantages afforded by a variable geometry exhaust system for two stroke engines according to the present invention, a preferred embodiment will now be described by way purely of example and implying no limitation, with reference to the accompanying drawings, in which:
- Figure 1 illustrates the principle of a variable geometry exhaust system for two stroke engines according to the invention;
- Figure 2 illustrates two different lengths of a fixed geometry exhaust system which correspond to the two positions of a slidable element, indicated in figure 1, of the exhaust system according to the invention;
- Figure 3 shows one possible embodiment of the invention, viewed in longitudinal section;
- Figure 4 is the view from F in figure 3;
- Figure 5 illustrates a further embodiment of the invention, viewed in longitudinal section;
- Figures 6 and 7 schematically illustrate the adoption of a slidable element having a tapered shaft, and the corresponding configuration in a fixed geometry exhaust system of conventional type;
- Figures 8 and 9 illustrate how sound absorbent material might be positioned in the exhaust system according to the invention;
- Figure 10 illustrates a possible system for adjusting the position of the slidable element manually, viewed in longitudinal section.

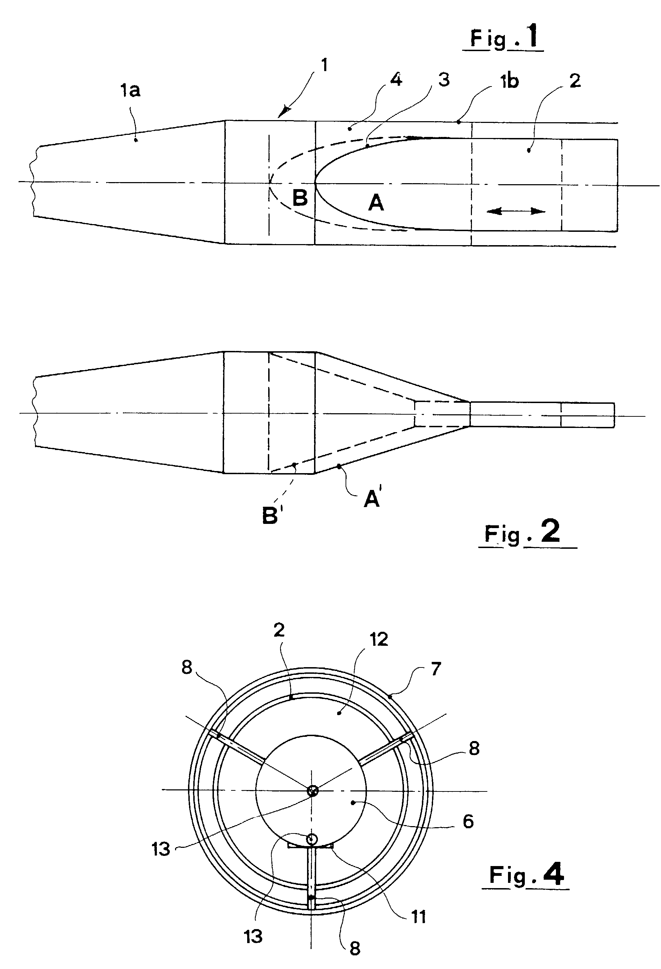

With reference to figure 1 of the accompanying drawings, 1 generically denotes a terminal portion presented by the pipe of an exhaust system for two stroke engines, comprising a divergent portion 1a associated coaxially with a cylindrical portion 1b that extends toward the outlet of the system. Cylindrical portion 1b accommodates an axially slidable element 2 of substantially cylindrical shape having one end 3 of conical or ogival profile directed back into pipe 1. Conical end 3 of slidable element 2 combines with the cylindrical wall of the pipe 1 to create an annular passage 4 the section of which decreases gradually toward the outlet of the pipe. Displacing the slidable element 2 in the upstream direction, into pipe 1, annular passage 4 is created in a part of the cylindrical portion 1b nearer to the divergent portion 1a: the contrary conversely occurs when slidable element 2 is displaced in the downstream direction, i.e. toward the outlet of pipe 1. In short, passage 4 of decreasing section corresponds in functional terms to the reverse cone portion of a conventional exhaust system, so that in practice, the effect of moving the annular passage 4 nearer to or farther from the divergent portion 1a is to reduce or increase the length of the exhaust pipe.

This will become evident when comparing figures 1 and 2: figure 1 shows slidable element 2 in two positions A and B, indicated by solid and phantom lines respectively, which would correspond to two different configurations in a conventional exhaust pipe of fixed geometry, as denoted by A' and B' in figure 2.

The axial movement of slidable element 2 is related fundamentally to engine speed, occurring in response to variations in the number of revolutions per minute, and brought about by way of actuator means to which the element is connected; such means are piloted by a signal correlated to the number of revolutions and possibly to the load on the engine.

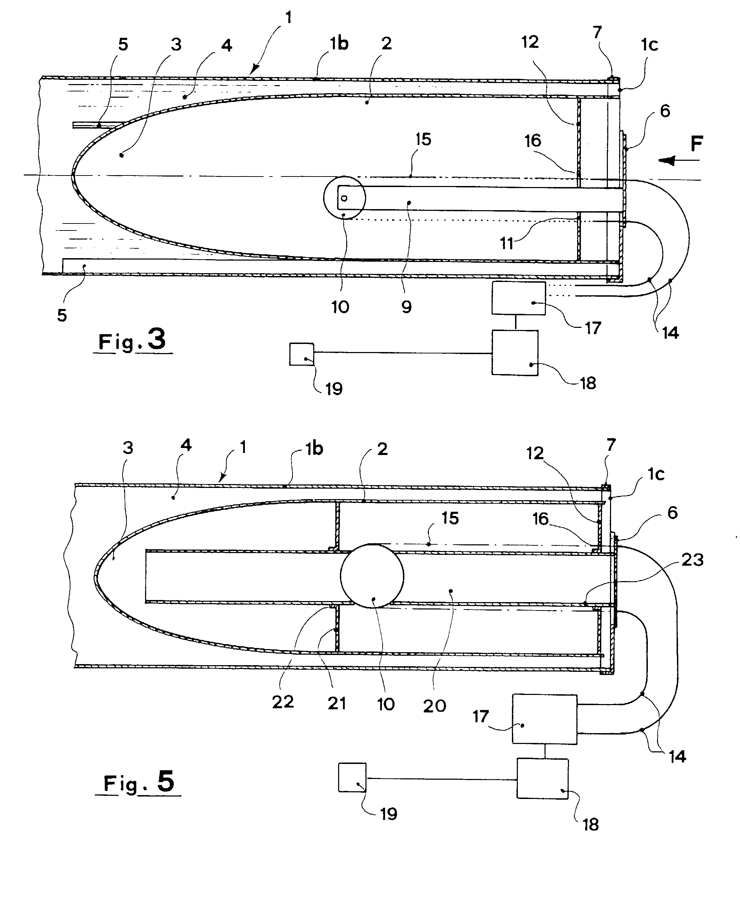

One possible embodiment of the present invention is illustrated in figures 3 and 4. As discernible from these figures, the cylindrical portion 1b of the exhaust pipe 1 provides three radial guides 5 on the inside, spaced apart angularly one from the next at 120°, by which element 2 is slidingly accommodated in a position coaxial with the cylindrical portion 1b. Pipe 1 is fitted with a collar 7 fixed to its outlet end 1c and incorporating three radially, outwards oriented struts 8, aligned with and having the same cross section as the three guides 5, which serve to carry a central supporting element 6 shown in the example of the drawings as a disc disposed perpendicularly to pipe 1 and concentric with the axis thereof, of diameter no greater than that of slidable element 2. From the face of support 6 directed toward the inside of pipe 1 an arm 9 axially extends, in particular consisting in two parallel bars spaced apart one from the other and carrying a pulley 10, rotably mounted to its free end. Arm 9 extends axially into slidable element 2, passing through a window 11 formed in a diaphragm 12 located near to the corresponding end of element 2.

A flexible cable 15 is engaged around pulley 10, anchored at a point indicated with 16 to diaphragm 12 of body 2 and routed both through window 11 and through holes 13, formed, one of which axially, in central support 6. Cable 15 is ensheathed by guide means 14 and connected to a stepping motor 17 (indicated schematically) the operation of which is piloted by an electronic control unit 18 in response to a signal received from a sensor 19 and corresponding to the engine revolutions. Control unit 18 and sensor 19 are not illustrated in detail, being of a conventional type entirely familiar to persons skilled in the art.

In operation, control unit 18 establishes first of all whether the variation in the number of revolutions is positive or negative, in order to determine the direction of movement of slidable element 2. The travel of slidable element 2 in one direction or the other will therefore be such as to bring the element itself into the prescribed optimum position for a given engine speed. For example, with a 140 mm travel of slidable element 2 and a competition engine with exhaust timing of 195°, the optimum balance will be obtainable, in theory and approximately, between 10500 and 13000 rpm. Maximum performance of the engine is obtained within these values, accordingly, although a positive influence will also be discernible beyond the operating range in question inasmuch as the relative curve is bell shaped. Given that the powerband of such engines is approximately 5000 rpm, performance can be improved by a factor of more than 2500 rpm and maximized by 50%. Clearly, the powerband can be extended toward the bottom end or the top end only, so as to give more pulling power at low revolutions or more sustained power at high revolutions.

The spectrum across which a variation in length takes place is dictated essentially by the speed at which the stepping motor or other actuator device, be it mechanical or electromechanical, hydraulic or pneumatic, is able to invest slidable element 2 with motion throughout its full working travel. In particular, the acceleration of the actuator must be at least equal to that of the engine: the faster the rate at which an engine is capable of picking up revolutions, the lighter slidable element 2 needs to be and/or the greater must be the capacity of the actuator device to apply a force whereby slidable element 2 can be displaced through a given distance in a shorter time. Where the response of an engine to the throttle is slow, conversely, then the spectrum could be widened correspondingly.

The advantage of an exhaust system according to the present invention consists in the fact that the effect of the dimensional optimization piloted by a variation in engine rpm, and brought about in real time, is to minimize the loss of fresh gases from the exhaust port across the full spectrum of action afforded by the variable geometry, with the result that the filling of the cylinder and consequently the thermodynamic efficiency of the engine are both optimized. Compared to an exhaust system of fixed geometry, the system disclosed will enable a given engine to deliver better performance, or to deliver the same one burning less fuel, thus signifying that polluting emissions are also reduced.

In an alternative embodiment of the invention, illustrated in figure 5, element 2 is slidable not along radial guides but along an axial guide 20 extending perpendicularly from support 6 and utilized also as a mounting for pulley 10. In this case element 2 is internally provided with a further diaphragm 21 with a seat 22 slidably accommodating axial guide 20, and the end diaphragm 12 likewise affords a seat 23, similarly disposed and slidably accommodating guide 20. With this arrangement, power losses due to turbulent gas flow and friction are reduced to a minimum and there is no risk of the system seizing. In addition, the option exists of lining seats 22 and 23 with bushes fashioned from self-lubricating or other such material to the end of reducing friction and tolerances.

In this solution, slidable element 2 can be displaced through a distance limited to half its own length, approximately. Should a longer travel be required, the axial guide 20 could be insertable through a hole in the conical end of element 2 and secured to a supporting element similar to support 6 illustrated, located in the exhaust pipe upstream of slidable element 2. This particular solution will be readily envisaged in the light of figure 5, and therefore is not shown in detail.

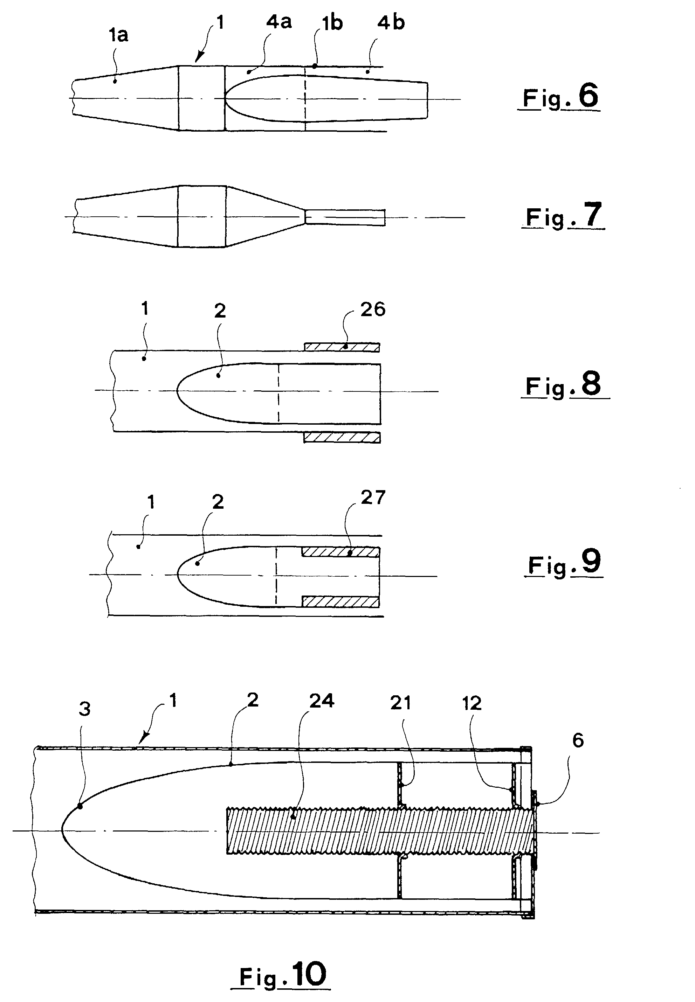

The cylindrical geometry of the terminal portion of pipe 1 in the embodiments above described remains substantially constant. Figures 6 and 7 illustrate a singularly interesting alternative embodiment in which the forward end of slidable element 2 again exhibits an ogival profile, whereas the shaft is tapered toward the opposite end so as to create an annular passage 4 that will comprise a convergent first portion 4a and a divergent second portion 4b toward the outlet of exhaust pipe 1. The advantage given by this solution is the same as that afforded by an exhaust of fixed geometry with a double cone terminal section, as discernible from fig 7. Where particular requirements may dictate, clearly enough, the configurations of the terminal portion, and those of the bulge, can be varied within generous limits by modifying the shape of the shaft as well as of the portion indicated with 1b, and changing their relative lengths.

In vehicles where the transmission incorporates a steplessly variable control, such as scooters, the revolutions of the engine remain unchanged as the ground speed increases or decreases. In effect, by adjusting certain components of the variable speed control system, the engine can be made to operate at a different "constant rpm" as the transmission ratio is varied, in such a way as to favour either the acceleration of the vehicle or its performance at the top end of the powerband. In this instance too, accordingly, the dimensions of the exhaust system need to be altered in order to optimize the efficiency of the engine at different speeds of rotation, though it is not necessary to vary the dimensions during operation. The variable geometry system appropriate to this application is therefore of a semi-static kind with respect to the basic solution disclosed and also the least expensive to implement, inasmuch as there is no fluid tight seal and no sliding fit, and consequently no precision engineering involved; neither are there any automated movements required. An example of this type of solution is illustrated in figure 10. Slidable element 2 is displaced by being screwed manually along a threaded axial guide 24, collar 7 having first been removed so as to free support 6, from which guide 24 extends perpendicularly. A fastening device of any familiar type can be employed for the purpose of locking element 2 in a given position relative to guide 24. An economical device of the type in question would consist in a lock nut screwed to support 6 with a lock washer interposed between the engaging surfaces.

Another advantage of the exhaust system according to the present invention is reflected in the ease with which sound absorbent material can be fitted. The material might be applied to the outer surface of exhaust pipe 1 as illustrated schematically in figure 8, where 26 denotes the muffler; with a configuration of this type, a much greater expanse of silencing surface is exposed for a given length of pipe than with a conventional muffler. If the accelerations of slidable element 2 are modest, and therefore the weight of the element is not a crucial factor in ensuring a precise response to variations in engine rpm, then the sound absorbent material can be located internally of element 2 as illustrated schematically in figure 9, where the material in question is indicated with 27, thus reducing the overall dimensions of the exhaust. Accordingly, the exhaust system disclosed has advantages over conventional systems in this department also, in that it affords better noise attenuation per unit length of muffled pipe, or in that for a specified level of attenuation, the system is more compact and any friction-related leakage of exhaust gases will be less. It would be possible in any event to utilize resonant chamber mufflers in conjunction with the exhaust system disclosed and still retain the positive aspects described above. Similarly, sound absorbent materials could be applied both to the outer surface of the pipe and to slidable element 2.

From a dimensional comparison between an exhaust system of conventional embodiment and the system according to the invention, it will be seen that less time is needed to set up the profiles of slidable element 2 in the system disclosed, also, the overall length of the system can be reduced, the same outside diameter can be maintained, and when the muffler is incorporated into slidable element 2 itself, the only additional weight will be that of the external servo mechanism by which element 2 is set in motion.

Whilst reference is made in the specification to a slidable element concentric with the exhaust pipe and appearing circular in section, both for ease of implementation and for the convenience of the comparison with conventional exhaust systems, it will be obvious that the same inventive concept is applicable to sections other than circular and/or irregular sections or to non-concentric assemblies. For example, the slidable element might exhibit a triangular section the angles of which coincide with three guides engaging the internal wall of cylindrical portion 1b. It is equally evident that the radial guides described with reference to the embodiment of figure 3 could be formed along slidable element 2 itself.

The slidable element might be embodied with two detachable parts in such a manner as will allow the trying of different reverse cone profiles and pipe geometries, within a short space of time, thereby achieving a significant reduction both of the time scales and of the costs involved in developing a new exhaust system. Furthermore, the manufacturers of mufflers for high performance scooters could produce a single basic component which apart from the fittings to the engine and the frame would be optimized thanks to the facility of varying the geometry to suit different engines, or could cater for the world of competition machines by producing a sectional model that would be "tunable" to suit the power unit and the nature of the track.

Finally, it will be appreciated that the exhaust system disclosed could be utilized in conjunction with a conventional device for injecting water into the exhaust pipe and/or fashioned with selective aerodynamic profiles in such a way that the thermal effect can also be exploited to widen the powerband still further.

The variable geometry exhaust system for two stroke internal combustion engines acording to the present invention can be modified and/or adapted to suit individual applications, without prejudice to the protection afforded under the appended claims.

## Claims

1. A variable geometry exhaust system for two stroke engines comprising an exhaust pipe (1) along which burnt gases are transported to an outlet, characterized in that said pipe (1) accommodates an axially slidable element (2) providing a shaft-like portion and an end portion (3) the section of which tapers toward the inside of said pipe, said slidable element (2) and said pipe (1) cooperating to delimit a passage (4) for said exhaust gases, means being provided for operating the displacement of said slidable element (2) as a function of the engine speed.

2. The exhaust system according to claim 1, wherein said means for operating the displacement of said slidable element (2) comprise a servo mechanism piloted by the number of revolutions of the engine.

3. The exhaust system according to the previous claims, wherein said servo mechanism comprises an electronic control unit (18) which receives a signal generated by a sensor (19) monitoring the revolutions of the engine to control a stepping motor (17), the rotation of which in one direction or the other produces a corresponding displacement of said slidable element (2).

4. The exhaust system according to claim 2, wherein said servo mechanism is piloted also by the load on the engine.

5. The exhaust system according to the previous claims, comprising transmission means connecting said stepping motor to said slidable element (2).

6. The exhaust system according to claim 5, wherein said transmission means comprise a flexible cable (15) integral to said slidable element and looped around a pulley (10) carried by an arm (9) extending through said slidable element (2) from a support element located at the outlet end of said exhaust pipe (4).

7. The exhaust system according to claim 6, wherein said slidable element (2) is slidably mounted on said arm (9).

8. The exhaust system according to claim 6, wherein said slidable element (2) is slidably mounted on guides (5) projecting from the inside wall of said pipe (1).

9. The exhaust system according to the previous claims, wherein said slidable element (2) exhibits one end of a substantially conical profile.

10. The exhaust system according to the previous claims, wherein said slidable element comprises a stem portion having a tapered profile.

11. The exhaust system according to the previous claims, wherein a layer of sound absorbent material (26, 27) is applied either to the inside surface of said shaft of said slidable element or to the inside and the outside surface of said exhaust pipe (1).

12. The exhaust system according to claims from 1 to 10, wherein a layer of sound absorbent material (26, 27) is applied both to the inside surface of said shaft of said slidable element (2) and to the outside surface of said exhaust pipe (1).

13. The exhaust system according to claim 1, wherein said means for operating the displacement of said slidable element (2) as a function of engine speed comprise a threaded rod (24) extending from a support (6) removably mounted at the outlet end of said exhaust pipe (1), said slidable element being threadedly engaged with said rod (24), so that its position with respect to said rod can be varied, means for locking said slidable element to said rod once it is in the required position being provided.
